# EUROPÄISCHE PATENTSCHRIFT

(11) **EP 3 517 715 B1**
(45) Veröffentlichungstag und Bekanntmachung des Hinweises auf die Patenterteilung: **02.08.2023**
(21) Anmeldenummer: 19151975.0
(22) Anmeldetag: 15.01.2019
(51) Int. Cl.: E05B 63/24, E05B 63/14, F16P 3/08, E05C 9/04, E05B 47/00, E05B 47/06, E05C 19/04

(54) **ZUHALTUNG MIT HILFSENTRIEGELUNG**
HOLDER WITH AUXILIARY UNLOCK
GÂCHETTE À DÉVERROUILLAGE AUXILIAIRE

(30) Priorität: 24.01.2018 DE 102018101603
(43) Veröffentlichungstag der Anmeldung: 31.07.2019
(73) Patentinhaber: K. A. Schmersal GmbH & Co. KG, 42279 Wuppertal (DE)
(72) Erfinder: GERBRACHT, Tobias, 42369 Wuppertal (DE); UHLENBROCK, Christian, 58239 Schwerte (DE); JACOBI, Sven, 42279 Wuppertal (DE)
(74) Vertreter: Kalkoff & Partner Patentanwälte mbB

(56) Entgegenhaltungen:
- DE-A1- 2 745 865
- DE-B4-102008 041 724
- DE-T2- 69 800 562
- FR-A- 1 511 800
- US-A- 2 293 363

## Beschreibung

Die Erfindung betrifft eine Zuhaltung, eine Sicherheitseinrichtung mit einer Zuhaltung und ein Verfahren zur Entriegelung einer Zuhaltung.

Unter einer Zuhaltung wird generell jede Form eines Mechanismus verstanden, der dazu geeignet ist, eine trennende Einrichtung wie bspw. eine Tür in einer geschlossenen Position zu halten. Bevorzugtes Anwendungsgebiet der hier betrachteten Zuhaltung ist die Sicherheitstechnik, insbesondere im Maschinen- und Anlagenbereich. Dort sind Gefahrenbereiche gesichert durch beweglich trennende Schutzeinrichtungen, z. B. Schwenk- oder Schiebetüren. An diesen sind sicherheitstechnische Zuhaltungen vorgesehen, insbesondere um den Zugang zu Gefahrenbereichen an Maschinen und Anlagen so lange zu verhindern, bis gefährliche Maschinenbewegungen gestoppt sind.

Die DE 27 45 865 A1 offenbart eine Türschließvorrichtung, deren Mechanik einen ersten Schieber und einen zweiten Schieber aufweist, die jeweils mit einer ersten bzw. einer zweiten Zinke eines Betätigers zusammenwirken. Die Schieber weisen jeweils einen Schlitz auf, die derart außer Flucht voneinander liegen, dass eine Klinke eine Tür nur dann schließen oder freigeben kann, wenn sich diese in einer gänzlich geschlossenen Position befindet und die vorgenannten Schlitze flächendeckend übereinander liegen. Die Schieber weisen rechtwinklig von einer Grundfläche abgewinkelte Laschen auf, an deren Enden einander zugewandte Auflaufflächen ausgebildet sind. Im Zuge des Eingriffs der Tür in an einer Falz angeordneten Löcher wirken an den Zinken in entgegengesetzter Richtung ausgebildete Auflaufflächen derart zusammen mit den vorgenannten Auflaufflächen, dass die Schieber entgegen einer zwischen ihnen angeordneten Feder auseinandergedrückt werden und die Zinken die Laschen hintergreifen können.

Die FR 1 511 800 A lehrt ein Sicherheitsschloss, das sich durch ein Paar bewegliche Backen auszeichnet, die einander zugewandt sind, wobei die jeweilige Backe mit Kerben in Form von Zähnen versehen ist. Die Backen sind an einer Grundplatte an Federn gelagert, so dass die Backen in vertikaler Richtung zwischen einer Verschlussposition

(Ruheposition) und entgegen der durch die Federn ausgeübten Kraft in eine Öffnungsposition bewegbar sind. Es ist ein gekerbter Riegel vorgesehen, welcher Zähne aufweist, die wiederum
hinsichtlich Ihrer Lage und Ausformung zu den Einkerbungen der Backen passend ausgebildet sind. Die Backen können somit auseinander bewegt werden, um den Eingriff mit dem Riegel zu ermöglichen.

Für einen einfachen Verschluss für das Staufach eines Kraftfahrzeugs ist aus der DE 10 2008 041 724 B4 eine Vorrichtung bekannt, bei der zwei Zahnstangenelemente im Eingriff mit einem Zahnrad stehen. An den Enden der Zahnstangenelemente sind Arretierelemente fixiert. Jedes Zahnstangenelement wird von einer Feder in Richtung einer Verriegelungsposition beaufschlagt, bei der die Arretierelemente in entsprechende Aussparungen eingreifen. Ein Elektromagnet lässt sich über einen Betätigungsschalter aktivieren, wodurch das Zahnrad so bewegt wird, dass die Zahnstangenelemente entgegen der Rückstellkräfte der Federn bewegt werden, wobei die Arretierungselemente aus einer Verriegelungsposition in eine Entriegelungsposition bewegbar sind.

Es kann als Aufgabe der Erfindung angesehen werden, eine Zuhaltung, eine Sicherheitseinrichtung und ein Verfahren zum Öffnen einer Zuhaltung vorzuschlagen, mit denen bei einer Zuhaltung eine Not- bzw. Hilfsentriegelung auf einfache Weise ermöglicht wird.

Die Aufgabe wird gelöst durch eine Zuhaltung gemäß Anspruch 1, eine Sicherheitseinrichtung gemäß Anspruch 13 und ein Verfahren gemäß Anspruch 14. Abhängige Ansprüche beziehen sich auf vorteilhafte Ausführungsformen der Erfindung.

Die erfindungsgemäße Zuhaltung umfasst ein Betätigerteil und ein Zuhaltungsteil, die zur Anbringung an zwei voneinander getrennten, gegeneinander beweglichen Teilen vorgesehen sind. In einem geschlossenen Zustand der Zuhaltung befinden sich Betätiger- und Zuhaltungsteil im Eingriff, während in einem geöffneten Zustand Betätiger- und Zuhaltungsteil voneinander getrennt werden. Im geschlossenen Zustand kann die Zuhaltung verriegelt werden, wobei Betätigerteil und Zuhaltungsteil dann so in einem verriegelten Eingriff stehen, dass sie durch einfaches Aufbringen einer Kraft in Öffnungsrichtung nicht voneinander getrennt werden können. Im entriegelten Zustand der Zuhaltung sind Betätigerteil und Zuhaltungsteil relativ zueinander beweglich und können getrennt werden.

Betätigerteil und Zuhaltungsteil können bspw. an beweglichen und/oder an feststehenden Teilen einer trennenden Schutzeinrichtung angebracht werden, bspw. an einem beweglichen Türteil und/oder an einem feststehenden Rahmen- oder Anschlagteil. Dabei ist bevorzugt das Betätigerteil zur Anbringung an einem beweglichen Teil einer trennenden Schutzeinrichtung, bspw. einer Schutztür, vorgesehen und hierfür besonders bevorzugt autonom ausgebildet, d. h. ohne drahtgebundene elektrische Zuleitung. Das Zuhaltungsteil ist bevorzugt zur Anbringung am feststehenden Teil einer trennenden Schutzeinrichtung vorgesehen und kann, bspw. eine drahtgebundene Zuleitung für elektrische Versorgung, Übermittlung von Daten über den Zustand der Zuhaltung und/oder zum Empfang von Steuerbefehlen aufweisen, insbesondere für eine Ansteuerung zum Öffnen oder Schließen der Zuhaltung.

Erfindungsgemäß weist das Zuhaltungsteil mindestens zwei in entgegengesetzten Richtungen hervorstehende Bolzenelemente auf, während das Betätigerteil zwei im Abstand zueinander angeordnete Aufnahmeelemente mit Aufnahmeöffnungen für die Bolzenelemente aufweist. So kann eine doppelt wirkende Verriegelung der Zuhaltung hergestellt werden, mit der auch bei geringer Baugröße hohe Zuhaltekräfte ermöglicht werden.

Das Betätigerteil ist bevorzugt klammerartig aufgebaut, d. h. zwischen den im Abstand angeordneten Aufnahmeelementen verbleibt bevorzugt ein freier Bereich zur teilweisen oder vollständigen Anordnung des Zuhaltungsteils. Die Aufnahmeöffnungen können bspw. als Hohlräume, Vertiefungen, Mulden oder Öffnungen ausgebildet sein und sind geeignet, ein Bolzenelement aufzunehmen, so dass es durch den gebildeten Eingriff in mindestens einer, bevorzugt in allen seitlichen Richtungen gegen Bewegungen gesperrt ist. Bevorzugt weisen die Aufnahmeöffnungen eine umlaufende Umrandung auf, die ein in einer Eingriffsrichtung darin aufgenommenes Bolzenelement in allen Querrichtungen sperrt.

Erfindungsgemäß sind die Aufnahmeelemente beweglich und können zumindest zwischen einer Zuhaltestellung und einer Öffnungsstellung bewegt werden. In der Zuhaltestellung nehmen die Aufnahmeelemente ein solche Position ein, dass die Bolzenelemente beidseits in den Aufnahmeöffnungen aufgenommen werden können. In der Öffnungsstellung hingegen wird der Abstand der Aufnahmeelemente vergrößert, so dass bevorzugt die Bolzenelemente nicht mehr beidseits in den Aufnahmeöffnungen aufgenommen sein können. Dann entfällt der für die Verriegelung der Zuhaltung notwendige Eingriff zwischen den Bolzenelementen und den Aufnahmeöffnungen, so dass die Zuhaltung insgesamt entriegelt ist.

Das Vorsehen einer solchen Entriegelungsmöglichkeit der Zuhaltung auf Seiten des Betätigers hat erhebliche Vorteile. Für den üblichen Betrieb der Zuhaltung wird bevorzugt das Ver- bzw. Entriegeln der Zuhaltung auf Seiten des Zuhaltungsteils bewirkt, insbesondere durch Bewegung der Bolzenelemente, während das Betätigerteil starr und unbeweglich bleibt. Durch die erfindungsgemäß ermöglichte Entriegelung auf Seiten des Betätigerteils durch Bewegen der Aufnahmeelemente wird dann eine zusätzliche Entriegelungsmöglichkeit geschaffen werden, die insbesondere als Not- oder Hilfsentriegelung für die Zuhaltung dienen kann. So kann eine zusätzliche Möglichkeit der Entriegelung der Zuhaltung geschaffen werden, bspw. als Fluchtentriegelung, ohne dass ein Eingriff in den Betätigungs- und/oder Steuermechanismus des Zuhaltungsteils notwendig ist. Durch die Verlagerung der Beweglichkeit vom Zuhaltungsteil auf das bevorzugt im Normalbetrieb passive Betätigerteil können solche zusätzlichen Funktionen auf sehr einfache Weise erreicht werden.

Erfindungsgemäß sind die Bolzenelemente im Zuhaltungsteil beweglich und können jeweils einzeln oder gemeinsam zumindest eine Rückzugsposition und eine Verschlussposition einnehmen. In der Verschlussposition stehen die Bolzenelemente z.B. so weit hervor, dass sie in den Aufnahmeöffnungen des Betätigerteils aufgenommen sind, sofern sich diese in der Zuhaltestellung befinden. Die Zuhaltung ist dann verriegelt. In der Rückzugsposition sind die Bolzenelemente bspw. gegenüber der Verschlussposition zurückgezogen und können ganz oder zumindest teilweise in einem Gehäuse des Zuhaltungsteils aufgenommen sein. Die Zuhaltung ist dann entriegelt. Erfindungsgemäß sind in der Rückzugsposition die Enden der Bolzenelemente näher zueinander angeordnet als in der Verschlussposition. In der Verschlussposition sind die Enden der Bolzenelemente bevorzugt weiter voneinander entfernt als die Aufnahmeöffnungen.

Die Bolzenelemente können am Betätigerteil auf verschiedene Weise beweglich angeordnet sein, wobei besonders bevorzugt eine Verschiebbarkeit beider Bolzenelemente in entgegengesetzter Richtung, besonders bevorzugt entlang einer gemeinsamen linearen Bewegungsachse möglich ist. Weiter bevorzugt kann im Zuhaltungsteil ein Antrieb zur Bewegung der Bolzenelemente und/oder zum Sperren der Bolzenelemente in der Verschlussposition vorgesehen sein. Mit einem ansteuerbaren Antrieb, bspw. einem Hubmagneten, Elektromotor oder anderen elektrisch oder anderweitig ansteuerbaren Aktor ist das Zuhaltungsteil somit ansteuerbar, wobei je nach Ansteuerung die Bolzenelemente in eine gewünschte Position bewegt und/oder in der gewünschten Position gesperrt werden können.

Zur Herstellung einer Beweglichkeit am Betätigerteil sind verschiedene Konstruktionen geeignet. Im Prinzip ausreichend, bspw. für eine nur einmalig zu verwendende Notentriegelung, wäre bereits eine Freigabe der Bewegung eines oder beider Aufnahmeelemente des Betätigerteils, so dass sich diese unter Einwirkung äußerer Kräfte, die bspw. durch gegenläufige Bewegung von Zuhaltungsteil und Betätigerteil aufgebracht werden können, relativ zueinander bewegen. Bevorzugt sind allerdings Konstruktionen, bei denen zumindest eines und bevorzugt beide Aufnahmeelemente geführt beweglich sind, wobei weiter bevorzugt die Aufnahmeelemente jeweils lineare, in entgegengesetzte Richtungen voneinander weg weisende Bewegungen ausführen.

Gemäß einer bevorzugten Ausführungsform kann das zwischen den Aufnahmeelementen angeordnete Verbindungsstück mehrteilig ausgebildet sein, um eine Beweglichkeit zu erlauben. Insbesondere kann es ein erstes Verbindungsteil aufweisen, das mit einem ersten Aufnahmeelement verbunden ist und ein zweites Verbindungsteil, das mit einem zweiten Aufnahmeelement verbunden ist. Die Verbindungsteile können dann relativ zueinander beweglich angeordnet, insbesondere relativ zueinander verschieblich geführt sein.

Eine Möglichkeit zur Schaffung einer Beweglichkeit des Verbindungsteils kann eine Getriebevorrichtung mit zumindest einem Drehelement sein. Das Drehelement kann so gekoppelt sein, dass bei seiner Drehung die Aufnahmeelemente linear bewegt werden. So kann ein Antrieb für die Öffnungsbewegung der Aufnahmeelemente erreicht werden. An der Funktion von Getriebevorrichtung und Drehelement kann bspw. ein Zahnrad und mindestens eine Zahnstange beteiligt sein, oder mindestens eine drehbare Kulisse mit dazu passender Kulissenfläche.

Gemäß einer bevorzugten Ausführung ist es möglich, dass das Betätigerteil mindestens ein Federelement aufweist, um mindestens eines der Aufnahmeelemente in Richtung der Zuhaltestellung zu beaufschlagen, bevorzugt beide Aufnahmeelemente oder mit diesen verbundene Verbindungsteile in Richtung aufeinander zu zu beaufschlagen. So schließt sich das Betätigerteil nach einer Bewegung in die Öffnungsstellung ohne äußere Kräfte selbststätig wieder.

Es ist möglich, am Betätigerteil eine Sperrvorrichtung vorzusehen, mit der die Bewegung der Aufnahmeelemente gesperrt werden kann. Bei aktiver Sperrvorrichtung kann somit sichergestellt sein, dass das Betätigerteil in der Zuhaltestellung verbleibt. Um eine Bewegung in die Öffnungsstellung zu ermöglichen, kann die Sperrvorrichtung bspw. deaktiviert oder entfernt werden.

In einer bevorzugten Ausführung kann das Betätigerteil an einem Tür- oder Anschlagteil angebracht sein. Hierfür kann eine Befestigung des Verbindungsstücks an dem Tür- oder Anschlagteil vorgesehen sein. Bevorzugt ist die Befestigung so ausgebildet, dass sie eine Verschiebung mindestens eines Teils des Verbindungsstücks zulässt. Insbesondere kann die Befestigung somit die Bewegung von der Zuhaltestellung in die Öffnungsstellung ermöglichen. Eine mögliche Befestigung dieser Art ist bspw. eine Schraube oder ein Bolzen, der in einem Langloch verschiebbar geführt ist.

In einer Ausführung der Erfindung, bei der das Betätigerteil an einem Tür- oder Anschlagteil vorgesehen ist, kann eine Betätigungswelle vorgesehen sein, mit der die Bewegung der Aufnahmeelemente von der Zuhaltestelle in die Öffnungsstellung bewirkt und/oder freigegeben bzw. gesperrt werden kann. Auf diese Weise kann eine Bedienung über eine gewisse

Entfernung ermöglicht werden. Wenn die Betätigungswelle ein Tür- oder Anschlagteil durchdringt, an dem das Betätigerteil angebracht ist, ist eine Bedienung von der anderen Seite aus möglich. Bspw., wenn die Zuhaltung an einer beweglich trennenden Schutzeinrichtung angebracht ist, mit der ein Maschinen- oder Anlagenbereich abgesperrt wird, kann ein Betätigerteil auf der Innenseite durch das Tür- oder Anschlagteil hindurch eine Öffnung der Zuhaltung auf der Außenseite bewirken, bspw. zur Verwirklichung einer Fluchtentriegelung.

Die Zuhaltung kann so ausgebildet sein, dass eine Bewegung der Aufnahmeelemente von der Zuhaltestellung in die Öffnungsstellung stets ermöglicht wird, bspw. durch externe Betätigung direkt an dem Betätigerteil. Es ist aber auch möglich, dass zur Beeinflussung, d.h. bspw. zur Sperrung und/oder zur Bewirkung der Bewegung der Aufnahmeelemente eine Verbindung mit dem Zuhaltungsteil besteht. Hierfür kann bspw. ein Verbindungselement vorgesehen sein, das zwischen Zuhaltungsteil und Betätigereinheit wirkt, bevorzugt als mechanisches Verbindungselement, über das je nach Ausgestaltung bspw. die Bewegung der Aufnahmeelemente von der Zuhaltestellung in die Öffnungsstellung wahlweise blockiert oder freigegeben werden kann, oder alternativ sogar über das Verbindungselement ein Antrieb der Aufnahmeelemente zur Ausführung der Bewegung in die Öffnungsstellung bewirkt werden kann.

Gemäß einer Weiterbildung der Erfindung kann vorgesehen sein, dass an mindestens einem der Bolzenelemente und/oder mindestens einem der Aufnahmeelemente eine Abschrägung und/oder Abrundung vorgesehen ist. Eine solche Abschrägung oder Abrundung am Aufnahmeelement und/oder Bolzenelement kann bewirken, dass bei Beaufschlagung quer zur Eingriffsrichtung zwischen Bolzenelement und Aufnahmeöffnung ein leichteres Herstellen oder Trennen des Eingriffs ermöglicht wird. Denn durch die Abschrägung wird eine Kraftwirkung quer zur Eingriffsrichtung umgesetzt in eine Kraftwirkung längs der Eingriffsrichtung. Eine Abrundung entspricht in ihrer Wirkung einer Abschrägung, allerdings mit variablem Winkel. Durch Abrundung oder Abschrägung kann bspw. ein bestehender Eingriff zwischen den Bolzenelementen und den Aufnahmeelementen durch Aufbringung einer Kraft in Querrichtung gelöst werden, sofern die Bolzenelemente nicht gesperrt und - bspw. gegen die Kraft einer Feder - in Eingriffsrichtung beweglich angeordnet sind. Ebenso kann durch eine Abrundung oder Abschrägung an der Außenseite der Aufnahmeelemente und/oder Abrundung oder Abschrägung an den Bolzenelementen ermöglicht werden, eine trennende Schutzeinrichtung, an der die Zuhaltung angebracht ist, allein durch Aufbringen einer Kraft in Querrichtung zu schließen, wobei die Bolzenelemente bevorzugt federgelagert sind, um nachfolgend einen rastenden Eingriff mit den Aufnahmeöffnungen herzustellen.

Nachfolgend werden Ausführungsformen der Erfindung anhand von Zeichnungen näher beschrieben. Dabei zeigen:
- Fig. 1, Fig. 2: in perspektivischer Darstellung eine erste Ausführungsform einer Zuhal-tung im geschlossenen und geöffneten Zustand;
- Fig. 3a-c: schematische Darstellungen einer allgemeinen Ausführungsform einer Zuhaltung in verschiedenen Positionen;
- Fig. 4: eine schematische Darstellung einer Sicherheitseinrichtung mit einer Zuhaltung;
- Fig. 5: eine perspektivische Darstellung einer Betätigereinheit gemäß der ersten Ausführungsform aus Fig. 1, Fig. 2 mit entferner Abdeckung;
- Fig. 6, 7: Draufsichten auf die Betätigereinheit aus Fig. 5 in verschiedenen Positionen;
- Fig. 8: in perspektivischer Darstellung eine Betätigereinheit gemäß einer zweiten Ausführungsform mit entfernter Abdeckung;
- Fig. 9, 10: Draufsichten auf die Betätigereinheit gemäß Figur 8 in verschiedenen Positionen;
- Fig. 11: schematische Darstellung einer weiteren Ausführungsform einer Zuhaltung mit einem Verbindungselement zwischen Zuhaltungsteil und Betätigereinheit.

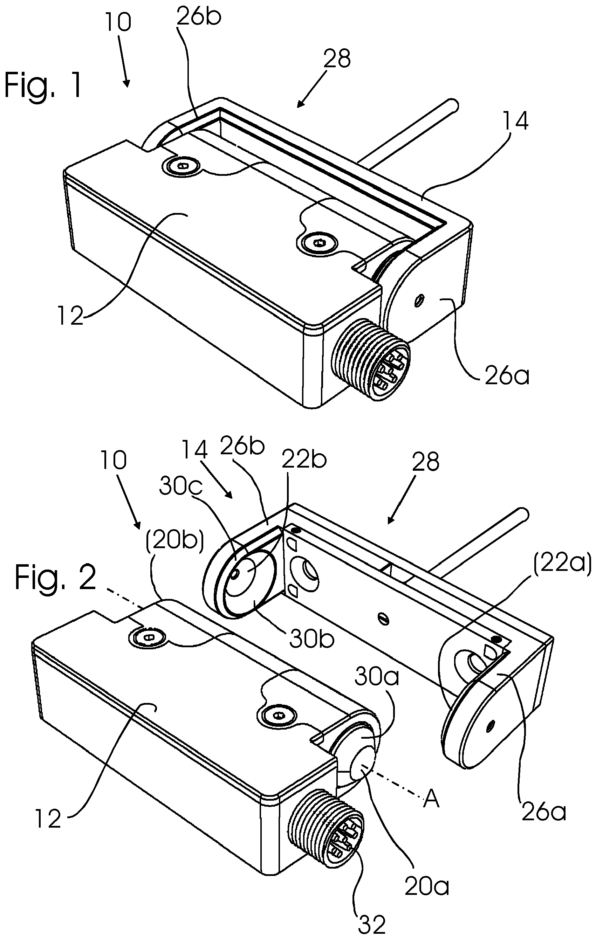

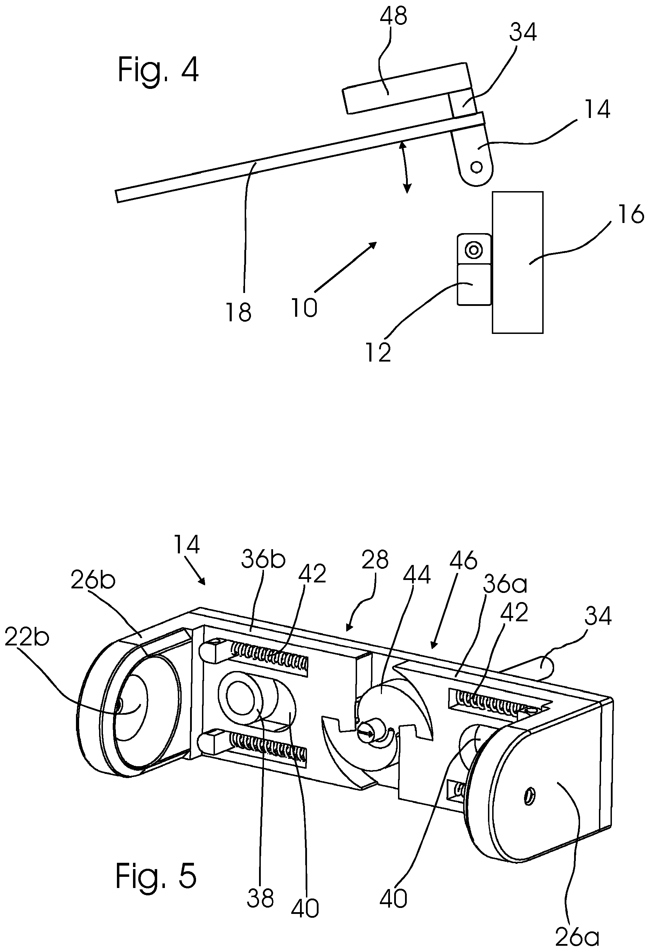

In Figur 1, 2 ist eine Zuhaltung 10 dargestellt mit einem Zuhaltungsteil 12 und einem Betätigerteil 14. Zur Bildung einer Sicherheitseinrichtung kann die Zuhaltung 10 wie schematisch in Figur 4 gezeigt an Teilen einer trennenden beweglichen Sicherheitseinrichtung für eine Maschine oder Anlage (nicht dargestellt) angebracht sein. Bspw. kann wie in Figur 4 skizziert das Zuhaltungsteil 12 an einem feststehenden Anschlag oder Rahmen 16 und das Betätigerteil 14 an einer beweglichen Tür 18 angeordnet sein, mit der der Zugang zu der Maschine oder Anlage versperrt ist.

In dem in Figur 1 dargestellten Zustand ist die Zuhaltung geschlossen und Zuhaltungsteil 12 und Betätigerteil 14 befinden sich im Eingriff miteinander. Bei Anbringung von Zuhaltungsteil 12 und Betätigerteil 14 an den Elementen 16, 18 einer trennend beweglichen Schutzeinrichtung ist dann auch die Schutzeinrichtung geschlossen. Durch Trennung von Zuhaltungsteil 12 und Betätigerteil 14 wie in Figur 2 gezeigt wird die Zuhaltung geöffnet, bspw. zur Öffnung der Tür 18 in der Sicherheitseinrichtung von Figur 4.

Das Betätigerteil 14 hat, wie insbesondere aus Figur 2 ersichtlich ist, einen klammerartigen Aufbau mit zwei im Abstand zueinander angeordneten Backen 26a, 26b und einem sich dazwischen erstreckenden Verbindungsteil 28.

Im geschlossenen Zustand ist die Zuhaltung 10 verriegelbar durch Bolzen 20a, 20b, die in einer Eingriffsrichtung entlang einer Achse A in entgegengesetzte Richtungen beweglich sind. Die Bolzen 20a, 20b können so eine Verschlussposition einnehmen, bei der sie wie in Fig. 2 gezeigt aus dem Gehäuse des Zuhaltungsteils 12 hervorstehen und bei Eingriff mit dem Betätigerteil 14 dort in passenden Aufnahmemulden 22a, 22b aufgenommen sind.

Innerhalb des Gehäuses des Zuhaltungsteils 12 sind die Bolzen 20a, 20b entlang der gemeinsamen Bewegungsachse A unabhängig voneinander beweglich geführt. In einer bevorzugten Ausführung sind die Bolzen 20a, 20b in äußere Richtung, d.h. in Richtung der in Figur 2 dargestellten Verschlussposition federbelastet, können aber gegen die Federn (nicht dargestellt) in eine innere Rückzugsposition zurückgeschoben werden. Dabei ist in der äußeren Verschlussposition durch einen elektromechanischen Aktor, bspw. einen Elektromotor, eine Sperrung der Bolzen 20a, 20b möglich, sodass diese im gesperrten Zustand nicht in die Rückzugsposition beweglich sind.

Auf diese Weise kann die Zuhaltung 10 im geschlossenen und verriegelten Zustand, in dem die Bolzen 20a, 20b in ihrer Eingriffsrichtung entlang der Achse A in die Eingriffsmulden 22a, 22b eingreifen, gesperrt werden. Eine Öffnung der Zuhaltung 10 oder einer beweglichen Sicherheitseinrichtung (Figur 4), an der die Zuhaltung 10 angebracht ist, ist dann nicht möglich.

Wie aus Figur 2 ersichtlich ist, weisen die Bolzen 20a, 20b Schrägflächen 30a auf. Die Aufnahmemulden 22a, 22b weisen passende innere Schrägflächen 30b auf und die Backen (Aufnahmeelemente) 26a, 26b weisen an der Umrandung der Aufnahmemulden 22a, 22b weitere Schrägflächen 30c auf. Die Schrägflächen 30a, 30b, 30c sind jeweils gegenüber der Eingriffsrichtung (Achse A) unter einem Winkel von ca. 30° oder mehr schräg angeordnet. Durch Zusammenwirkung der Schrägflächen 30a, 30b kann die Zuhaltung 10, so lange die Bolzen 20a, 20b nicht in der Verschlussposition gesperrt sind, durch Aufbringen einer Kraft quer zur Eingriffsrichtung der Bolzen 20a, 20b geöffnet oder geschlossen werden. Bspw. rastet die Zuhaltung 10 beim Schließen der Tür 18 der Sicherheitseinrichtung von Figur 4 ein, d.h. die Bolzen 20a, 20b werden durch Anlage der Schrägflächen 30a, 30c zunächst zurückgeschoben und dann durch Federwirkung in die Verschlussposition gedrückt. Beim Öffnen der Tür 18 wirken die Schrägflächen 30a der Bolzen 20a, 20b und die inneren Schrägflächen 30b der Aufnahmeöffnungen 22a, 22b in gleicher Weise zusammen.

Zur Ansteuerung eines im Zuhaltungsteil 12 vorgesehenen elektromechanischen Aktors (nicht dargestellt) für die Sperrung der Bolzen 20a, 20b sowie zur Rückmeldung von Sensordaten über den Zustand der Zuhaltung 10, insbesondere die aktuelle Verschlussposition der Bolzen 20, weist das Zuhaltungsteil 12 einen Steckeranschluss 32 auf.

Mit der Zuhaltung 10 kann so eine Sicherheitseinrichtung (Figur 4) gebildet werden, bei der im regulären Betrieb die verschiedenen Funktionen der Zuhaltung, d.h. Öffnen, Schließen, Ver- bzw. Entriegeln sowie Sperren/Entsperren stets durch bewegliche und zum Teil ansteuerbare Elemente im Zuhaltungsteil 12 erreicht werden, während der Betätigerteil 14 im normalen Betrieb rein passiv und starr bleibt. Dabei kann durch die doppelte, in entgegengesetzte Richtungen wirkende Verriegelung der entlang der gemeinsamen Achse A beweglichen Bolzen 20a, 20b in den passenden Aufnahmen 22a, 22b eine sehr hohe Zuhaltekraft erreicht werden.

Zusätzlich zu der somit im Zuhaltungsteil 12 realisierten Funktionalität weisen die verschiedenen Ausführungsformen der Erfindung jedoch auch auf Seiten des Betätigerteils 14 eine Entriegelungsfunktion für die Zuhaltung 10 auf. Dafür sind die Backen (Aufnahmeelemente) 26a, 26b des Betätigerteils 14, in denen die Aufnahmen 22a, 22b angeordnet sind, entlang der Eingriffsrichtung, d.h. parallel zur Achse A, beweglich angeordnet.

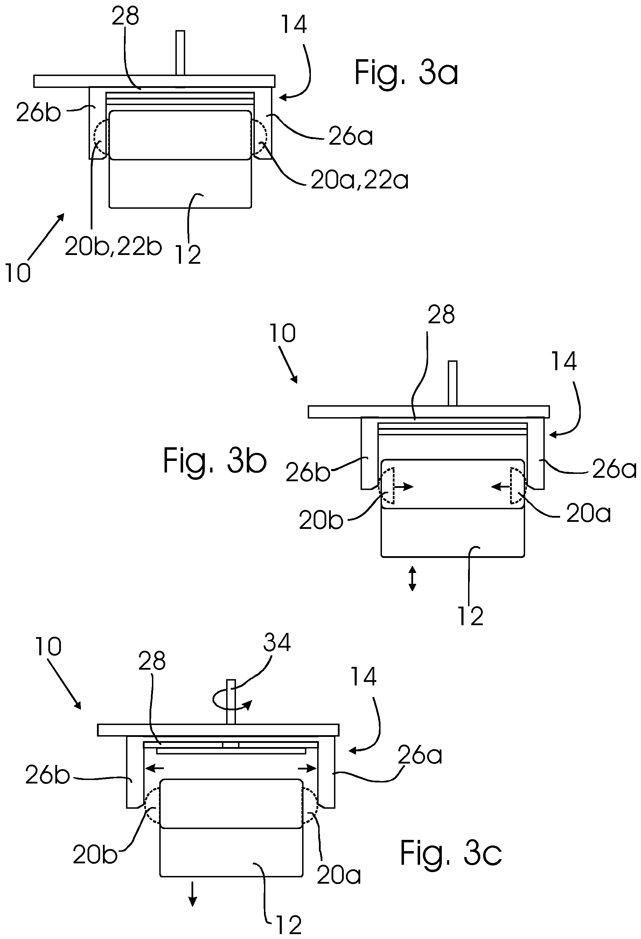

Für ein allgemeines Ausführungsbeispiel der Zuhaltung 10 sind in Figur 3a-3c verschiedene Positionen gezeigt. Figur 3a zeigt eine geschlossene, verriegelte Position, bei der die Bolzen 20a, 20b beidseits in den Aufnahmen 22a, 22b des Betätigerteils 14 aufgenommen sind.

Figur 3b zeigt schematisch das Öffnen bzw. Schließen der Zuhaltung 10, wobei (unter Zusammenwirkung der jeweiligen Schrägflächen 30a, 30b, 30c an Bolzen 20a, 20b und Aufnahmeelementen 26a, 26b) Betätigerteil 14 und Zuhaltungsteil 12 auseinandergezogen oder ineinandergeschoben werden, wobei die Bolzen 20a, 20b aus einer ausgefahrenen Verschlussposition in eine in das Gehäuse des Zuhaltungsteils 12 zurückgezogene Rückzugsposition verschoben werden. Dies entspricht, wie vorstehend bereits erläutert, der üblichen Funktionsweise der Zuhaltung 10.

Eine alternative, auf Seiten des Betätigerteils 14 realisierte Entriegelungsmöglichkeit für die Zuhaltung 10 ist in Figur 3 gezeigt. Dabei werden die Backen 26a, 26b des klammerartigen Betätigerteils 14 linear nach außen bewegt. Selbst wenn sich die Bolzen 20a, 20b weiterhin in der ausgefahrenen Verschlussposition befinden, ist dann die Verriegelung aufgehoben, wenn die Backen 26a, 26b so weit auseinandergefahren werden, dass der Abstand dazwischen größer ist als der Abstand der äußeren Enden der Bolzen 20a, 20b (Figur 3c).

Dabei kann die Bewegung der Backen 26a, 26b bspw. wie in Figur 3c angedeutet bewirkt werden durch Drehung einer Betätigerwelle 34, durch die eine Antriebs- bzw. Führungsmechanik im Verbindungsstück 28 des Betätigerteils 14 betätigt wird, mit der die Backen 26a, 26b nach außen verschoben werden.

In Figur 5-7 ist für eine erste Ausführungsform eine entsprechende Mechanik am Betätigerteil 14 gezeigt, wobei eine vordere Deckplatte aus Darstellungsgründen entfernt wurde.

Wie in Figur 5 dargestellt ist in der ersten Ausführungsform das Verbindungsstück 28 des Betätigerteils 14 mehrteilig ausgebildet. Ein erstes Teilelement 36a ist einstückig mit einer ersten Backe 26a und ein zweites Teilelement 36b einstückig mit einer zweiten Backe 26b ausgebildet. Jedes der Teilstücke 36a, 36b ist mittels eines Bolzens 38, der in einem Langloch 40 geführt ist, in Eingriffsrichtung verschieblich angebracht. Dabei wirken Federelemente 42 so auf die Teilelemente 36a, 36b, dass hierdurch die Backen 26a, 26b nach innen in die Zuhaltestellung beaufschlagt werden.

Die Betätigerwelle 36 ist mit einem Drehelement 44 gekoppelt, das Teil einer Getriebemechanik 46 ist, mit der bei Drehung von Betätigerwelle 34 und Drehelement 44 die Teilelemente 36a, 36b mit den einstückig daran angebrachten Backen 26a, 26b entgegen der Wirkung der Federn 42 nach außen verschoben werden können.

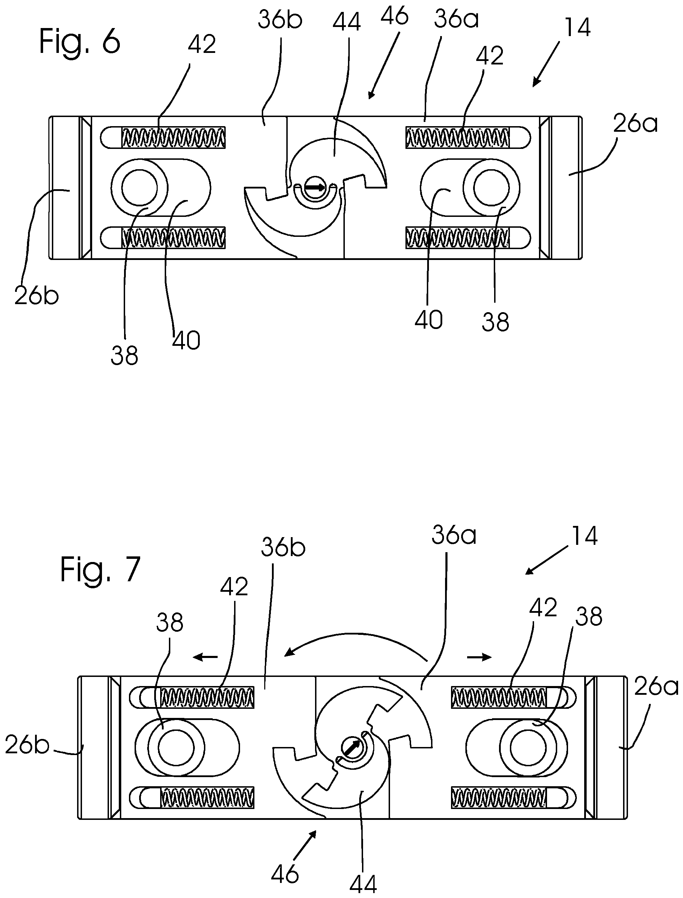

Die Wirkung der Getriebemechanik 46 ist aus Figur 6, Figur 7 ersichtlich. Bei dieser Ausführungsform ist die Getriebemechanik als Kulissentrieb und das Drehelement 44 als Exzenterelement realisiert. Die äußeren Flächen des Exzenterelements 44 beaufschlagen bei einer Drehung die Kanten der Teilelemente 36a, 36b und drängen diese nach außen, so dass die gewünschte Bewegung der Backen 26a, 26b erreicht wird. Eine Rückstellung erfolgt durch die Federelemente 42.

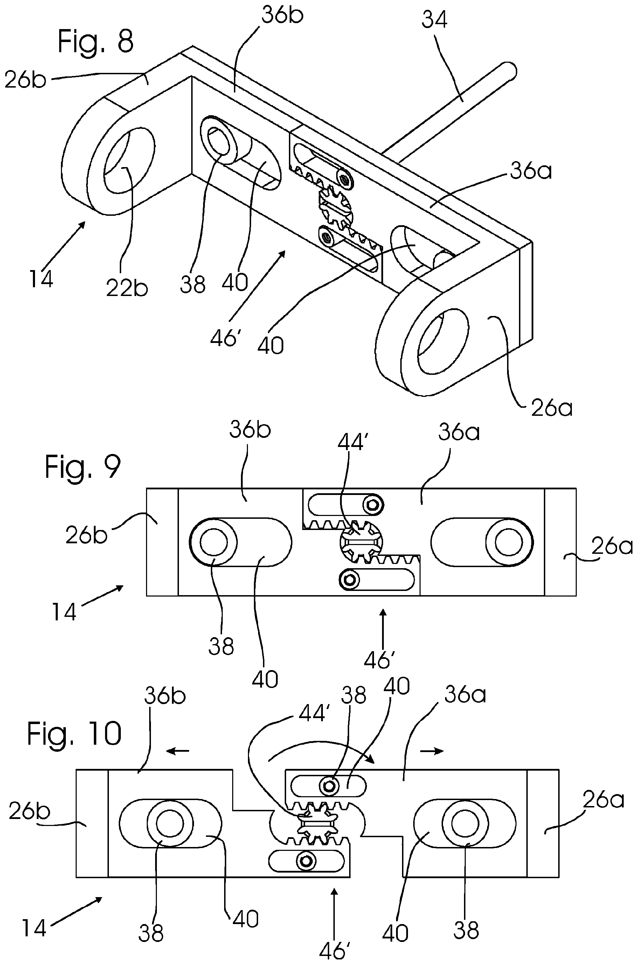

Eine zweite Ausführungsform eines Betätigerteils 14 mit der beschriebenen Zusatzentriegelungsfunktion ist in Figur 8-10 dargestellt. Dabei stimmt die zweite Ausführungsform gemäß Figur 8-10 in vielen Elementen mit der ersten Ausführungsform gemäß Figur 5-7 überein. Gleiche Elemente sind mit gleichen Bezugszeichen gekennzeichnet. Nachfolgend werden lediglich die Unterschiede zwischen den Ausführungsformen näher erläutert.

Bei der zweiten Ausführungsform gemäß Figur 8-10 ist die Vortriebsmechanik zum Verfahren der Teilelemente 32a, 32b von der Zuhaltestellung (Figur 9) in die Öffnungsstellung (Figur 10) realisiert durch einen Zahnstangenantrieb 46', bei dem auf der Betätigerwelle 36 ein Zahnrad 44' angeordnet ist, das mit einer an den Teilelementen 36a, 36b vorgesehenen Verzahnung zusammenwirkt. Dabei sind die Teilelemente 36a, 36b noch durch zusätzliche Bolzen 38 in zusätzlichen Langlöchern 40 geführt.

Auf der Betätigerwelle 34 kann ein manuelles Bedienelement wie bspw. eine Klinke 48 (Figur 4) angebracht werden. Bei einer mit der Zuhaltung 10 realisierten Sicherheitseinrichtung mit einer Tür 18 wie in Figur 4 dargestellt kann die Betätigerwelle 34 die Tür 18 durchdringen. Ist die Zuhaltung 10 auf der Außenseite eines für eine Maschine oder Anlage vorgesehenen Sicherheitsbereichs angeordnet, so kann auf diese Weise die Klinke 48 oder ein anderes manuelles Bedienelement auf der gegenüberliegenden Innenseite angeordnet sein. Auf diese Weise kann eine nur von der Innenseite bedienbare Fluchtentriegelung realisiert werden.

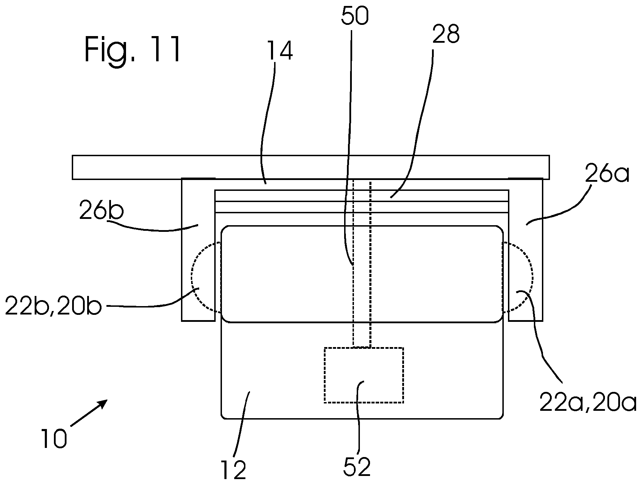

Figur 11 zeigt schematisch eine weitere Ausführungsform. Bei der Ausführungsform gemäß Figur 11 sind Betätigerteil 14 und Zuhaltungsteil 12 zusätzlich durch eine Verbindungswelle 50 gekoppelt, die innerhalb des Gehäuses des Zuhaltungsteils 12 an einen elektromechanischen Aktor 52 gekoppelt ist. Mit der Verbindungswelle 50 kann von Seiten des Zuhaltungsteils 12 die zusätzliche Entriegelungsfunktion des Betätigerteils 14 angesteuert und/oder blockiert werden. Durch eine entsprechende Ansteuerung des elektromechanischen Aktors 52 kann so entweder die zusätzliche Entriegelungsfunktion ermöglicht oder unterbunden werden, alternativ sogar aktiv ausgelöst werden.

Durch die verschiedenen Ausführungsformen ist somit für Zuhaltungen und Sicherheitseinrichtungen eine Entriegelungsfunktion auf Seiten des Betätigerteils ermöglicht. Diese Entriegelungsfunktion kann die alleinige Entriegelungsmöglichkeit der Zuhaltung bilden, bevorzugt handelt es sich wie dargestellt aber um eine zum Betrieb der Zuhaltung mit Bewegung der Bolzen zusätzliche Entriegelungsfunktion, mit der insbesondere eine Hilfs- oder Notentriegelung realisiert werden kann.

Dabei ist die Erfindung nicht auf die dargestellten Ausführungen beschränkt und es sind verschiedene Anderungen und Ergänzungen möglich, ohne den durch die Ansprüche definierten Schutzbereich zu verlassen. Insbesondere können die Bolzen in alternativen Ausführungen auf andere Weise als vorstehend beschrieben beweglich sein. Die verschiedenen Elemente der dargestellten Ausführungen können zudem vorteilhaft beliebig miteinander kombiniert werden, bspw. die Federelemente 42 auch bei anderen Ausführungen vorgesehen sein.

## Patentansprüche

1. Zuhaltung (10), mit
- einem Zuhaltungsteil (12) mit mindestens zwei in entgegengesetzten Richtungen hervorstehenden Bolzenelementen (20a, 20b),
- wobei die Bolzenelemente (20a,20b) im Zuhaltungsteil (12) beweglich sind zumindest zwischen einer Rückzugsposition und einer Verschlussposition, wobei die Enden der Bolzenelemente (20a,20b) in der Verschlussposition weiter voneinander entfernt sind als in der Rückzugsposition,
- und einem Betätigerteil (14) mit zwei im Abstand zueinander angeordneten Aufnahmeelementen (26a, 26b) mit Aufnahmeöffnungen (22a, 22b) zur Aufnahme der Bolzenelemente (20a, 20b) und mit einem Verbindungsstück (28) zur Verbindung der Aufnahmeelemente (26a, 26b),
- wobei die Aufnahmeelemente (26a, 26b) beweglich sind zumindest zwischen einer Zuhaltestellung, in der die Bolzenelemente (20a, 20b) beidseits in den Aufnahmeöffnungen (22a, 22b) aufgenommen sind und einer Öffnungsstellung zur Freigabe der Bolzenelemente (20a, 20b), wobei in der Öffnungsstellung der Abstand der Aufnahmeelemente (26a, 26b) größer ist als in der Zuhaltestellung.

2. Zuhaltung gemäß Anspruch 1, bei der
- im Zuhaltungsteil (12) ein Antrieb zur Bewegung der Bolzenelemente (20a, 20b) und/oder zur Sperrung der Bolzenelemente in der Verschlussposition vorgesehen ist.

3. Zuhaltung gemäß einem der vorangehenden Ansprüche, bei der
- das Verbindungsstück (28) mindestens ein erstes Verbindungsteil (36a) aufweist, das mit einem ersten Aufnahmeelement (26a) verbunden ist und ein zweites Verbindungsteil (36b), das mit einem zweiten Aufnahmeelement (26b) verbunden ist,
- und die Verbindungsteile (36a, 36b) relativ zueinander beweglich angeordnet sind.

4. Zuhaltung gemäß einem der vorangehenden Ansprüche, bei der
- am Verbindungsteil (28) eine Getriebevorrichtung (46, 46') vorgesehen ist mit einem Drehelement (44, 44'),
- wobei die Getriebevorrichtung (46, 46') mit den Aufnahmeelementen (26a, 26b) so gekoppelt ist, dass diese bei Drehung des Drehelements linear beweglich sind.

5. Zuhaltung gemäß Anspruch 4, bei der
- das Drehelement als Zahnrad (44') ausgebildet ist,
- und die Getriebevorrichtung (46') zumindest einen Verzahnungsbereich aufweist, der im Eingriff mit dem Zahnrad (44') steht.

6. Zuhaltung gemäß Anspruch 4, bei der
- die Getriebevorrichtung als Kulissenführung (46) ausgebildet ist.

7. Zuhaltung gemäß einem der vorangehenden Ansprüche, bei der
- mindestens ein Federelement (42) vorgesehen ist, um mindestens eines der Aufnahmeelemente (26a, 26b) in Richtung der Zuhaltestellung zu beaufschlagen.

8. Zuhaltung gemäß einem der vorangehenden Ansprüche, bei der
- am Betätigerteil (14) eine Sperrvorrichtung vorgesehen ist, um die Bewegung der Aufnahmeelemente (26a, 26b) zu sperren.

9. Zuhaltung gemäß einem der vorangehenden Ansprüche, bei der
- mindestens eine Befestigung zur Anbringung des Verbindungsstücks (28) an einem Tür- oder Anschlagteil (18) vorgesehen ist, wobei die Befestigung eine Verschiebung mindestens eines Teils des Verbindungsstücks (28) zulässt.

10. Zuhaltung gemäß einem der vorangehenden Ansprüche, bei der
- das Verbindungsstück (28) an einem Tür- oder Anschlagteil (18) befestigt ist,
- und eine Betätigungswelle (34) vorgesehen ist, die das Tür- oder Anschlagteil (18) durchdringt und mit der die Bewegung der Aufnahmeelemente (26a, 26b) zwischen Zuhaltestellung und Öffnungsstellung bewirkt und/oder gesperrt werden kann.

11. Zuhaltung gemäß einem der vorangehenden Ansprüche, bei der
- ein Verbindungselement (50) zwischen dem Zuhaltungsteil (12) und dem Betätigerteil (14) vorgesehen ist, wobei mit dem Verbindungselement (50) die Bewegung der Aufnahmeelemente (26a, 26b) zwischen Zuhaltestellung und Öffnungsstellung bewirkt und/oder gesperrt werden kann.

12. Zuhaltung gemäß einem der vorangehenden Ansprüche, bei der
- an mindestens einem der Bolzenelemente (20a, 20b) und/oder an mindestens einer der Aufnahmen (26a, 26b) eine Abschrägung und/oder Abrundung (30a, 30b, 30c) vorgesehen ist.

13. Sicherheitseinrichtung mit einer Zuhaltung (10) gemäß einem der vorangehenden Ansprüche, mit
- einem beweglichen Teil (18) und einem festen Teil (16) einer trennenden Schutzeinrichtung, wobei jeweils eines vom Zuhaltungsteil (12) und Betätigerteil (14) am beweglichen Teil (18) und das andere am festen Teil (16) der trennenden Schutzeinrichtung angebracht ist,
- wobei die trennende Schutzeinrichtung angeordnet ist, um den Zugang zu einer Maschine oder Anlage zu blockieren.

14. Verfahren zum Öffnen einer Zuhaltung (10), bei dem
- ein Zuhaltungsteil (12) mindestens zwei in entgegengesetzte Richtungen hervorstehende Bolzenelemente (20a, 20b) aufweist,
- wobei die Bolzenelemente (20a,20b) im Zuhaltungsteil (12) beweglich sind zumindest zwischen einer Rückzugsposition und einer Verschlussposition, wobei die Enden der Bolzenelemente (20a,20b) in der Verschlussposition weiter voneinander entfernt sind als in der Rückzugsposition,
- und an einem Betätigerteil zwei im Abstand zueinander angeordnete Aufnahmeelemente (26a, 26b) mit Aufnahmeöffnungen (22a, 22b) zur Aufnahme der Bolzenelemente (20a, 20b) und mit einem Verbindungsstück (28) zur Verbindung der Aufnahmeelemente (26a, 26b) vorgesehen sind,
- wobei zum Entriegeln der Zuhaltung (10) die Aufnahmeelemente (26a, 26b) von einer Zuhaltestellung, in der die Bolzenelemente (20a, 20b) beidseits in den Öffnungen (22a, 22b) aufgenommen sind, bewegt werden in eine Öffnungsstellung, in der der Abstand der Aufnahmeelemente (26a, 26b) größer ist als in der Zuhaltestellung, so dass die Bolzenelemente (20a, 20b) aus den Aufnahmeöffnungen (22a, 22b) freigegeben werden.

## Claims

1. A guard-locking device (10), comprising
- a guard-locking part (12) comprising at least two bolt elements (20a, 20b) that project in opposite directions,
- wherein the bolt elements (20a, 20b) in the guard-locking part (12) are movable at least between a retracted position and a locked position, wherein the ends of the bolt elements (20a, 20b) are further away from one another in the locked position than in the retracted position,
- and an actuator part (14) comprising two receiving elements (26a, 26b) that are arranged at a distance from one another and that have receiving openings (22a, 22b) for receiving the bolt elements (20a, 20b), and comprising a connection piece (28) for connecting the receiving elements (26a, 26b),
- wherein the receiving elements (26a, 26b) are movable at least between a guard-locking position, in which the bolt elements (20a, 20b) are received on both sides in the receiving openings (22a, 22b), and an open position for releasing the bolt elements (20a, 20b), wherein the distance between the receiving elements (26a, 26b) is greater in the open position than in the guard-locking position.

2. The guard-locking device according to claim 1, wherein
- a drive is provided in the guard-locking part (12) for moving the bolt elements (20a, 20b) and/or for blocking the bolt elements in the locked position.

3. The guard-locking device according to one of the preceding claims, wherein
- the connection piece (28) comprises a first connection part (36a) that is connected to a first receiving element (26a) and a second connection part (36b) that is connected to a second receiving element (26b),
- and the connection parts (36a, 36b) are arranged so as to be movable relative to one another.

4. The guard-locking device according to one of the preceding claims, wherein
- a gear device (46, 46') having a rotary element (44, 44') is provided on the connection part (28),
- wherein the gear device (46, 46') is coupled to the receiving elements (26a, 26b) such that said receiving elements are linearly movable during rotation of the rotary element.

5. The guard-locking device according to claim 4, wherein
- the rotary element is designed as a gearwheel (44'),
- and the gear device (46') comprises at least one toothing region that engages with the gearwheel (44').

6. The guard-locking device according to claim 4, wherein
- the transmission device is designed as a slotted guide system (46).

7. The guard-locking device according to one of the preceding claims, wherein
- at least one spring element (42) is provided in order to act on at least one of the receiving elements (26a, 26b) in the direction of the guard-locking position.

8. The guard-locking device according to one of the preceding claims, wherein
- a blocking device is provided on the actuator part (14) in order to block the movement of the receiving elements (26a, 26b).

9. The guard-locking device according to one of the preceding claims, wherein
- at least one fastening means is provided for attaching the connection piece (28) to a door or stop part (18), wherein the fastening means allows at least part of the connection piece (28) to be shifted.

10. The guard-locking device according to one of the preceding claims, wherein
- the connection piece (28) is fastened to a door or stop part (18),
- and an actuation shaft (34) is provided, which passes through the door or stop part (18) and by means of which the movement of the receiving elements (26a, 26b) between the guard-locking position and open position can be effected and/or blocked.

11. The guard-locking device according to one of the preceding claims, wherein
- a connection element (50) is provided between the guard-locking part (12) and the actuator part (14), wherein the movement of the receiving elements (26a, 26b) between the guard-locking position and open position can be effected and/or blocked by means of the connection element (50).

12. The guard-locking device according to one of the preceding claims, wherein
- a bevel and/or rounded portion (30a, 30b, 30c) is provided on at least one of the bolt elements (20a, 20b) and/or on at least one of the receiving means (26a, 26b).

13. A safety device comprising a guard-locking device (10) according to one of the preceding claims, comprising
- a movable part (18) and a stationary part (16) of a separating guard, wherein, in each case, one of the guard-locking part (12) and actuator part (14) is attached to the movable part (18) and the other is attached to the stationary part (16) of the separating guard,
- wherein the separating guard is arranged so as to block access to a machine or plant.

14. A method for opening a guard-locking device (10), wherein
- a guard-locking part (12) comprises at least two bolt elements (20a, 20b) that project in opposite directions,
- wherein the bolt elements (20a, 20b) in the guard-locking part (12) are movable at least between a retracted position and a locked position, wherein the ends of the bolt elements (20a, 20b) are further away from one another in the locked position than in the retracted position,
- and two receiving elements (26a, 26b) that are arranged at a distance from one another and that have receiving openings (22a, 22b) for receiving the bolt elements (20a, 20b), and comprising a connection piece (28) for connecting the receiving elements (26a, 26b), are provided on an actuator part,
- wherein, to unlock the guard-locking device (10), the receiving elements (26a, 26b) are moved from a guard-locking position, in which the bolt elements (20a, 20b) are received on both sides in the openings (22a, 22b), into an open position, in which the distance between the receiving elements (26a, 26b) is greater than in the guard-locking position, such that the bolt elements (20a, 20b) are released from the receiving openings (22a, 22b).

## Revendications

1. Interverrouillage (10) comprenant
- une partie d'interverrouillage (12) comprenant au moins deux éléments de boulon (20a, 20b) faisant saillie dans des directions opposées,
- dans lequel les éléments de boulon (20a, 20b) sont déplaçables dans la partie d'interverrouillage (12), au moins entre une position de retrait et une position de fermeture, dans laquelle les extrémités des éléments de boulon (20a, 20b) sont plus éloignées les uns des autres dans la position de fermeture que dans la position de retrait,
- et une partie d'actionnement (14) comprenant deux éléments de réception (26a, 26b) disposés à distance l'un de l'autre, avec des ouvertures de réception (22a, 22b) pour la réception des éléments de boulon (20a, 20b) et avec une pièce de liaison (28) permettant de relier les éléments de réception (26a, 26b),
- dans lequel les éléments de réception (26a, 26b) sont déplaçables au moins entre une position d'interverrouillage, dans laquelle les éléments de boulon (20a, 20b) sont accueillis de part et d'autre dans les ouvertures de réception (22a, 22b) et une position d'ouverture permettant de libérer les éléments de boulon (20a, 20b), l'espacement entre les éléments de réception (26a, 26b) étant plus grand dans la position d'ouverture que dans la position d'interverrouillage.

2. Interverrouillage selon la revendication 1, dans lequel
- un entraînement permettant de déplacer les éléments de boulon (20a, 20b) et/ou de verrouiller les éléments de boulon dans la position de fermeture est prévu dans la partie d'interverrouillage (12).

3. Interverrouillage selon l'une des revendications précédentes, dans lequel
- la pièce de liaison (28) présente au moins une première partie de liaison (36a) reliée à un premier élément de réception (26a) et une deuxième partie de liaison (36b) reliée à un deuxième élément de réception (26b),
- et les parties de liaison (36a, 36b) sont disposées de façon déplaçable les unes par rapport aux autres.

4. Interverrouillage selon l'une des revendications précédentes, dans lequel
- un dispositif d'engrenage (46, 46') avec un élément rotatif (44, 44') est prévu sur la pièce de liaison (28),
- dans lequel le dispositif d'engrenage (46, 46') est accouplé de telle façon aux éléments de réception (26a, 26b), que ceux-ci peuvent se déplacer linéairement lors de la rotation de l'élément rotatif.

5. Interverrouillage selon la revendication 4, dans lequel
- l'élément rotatif est conçu comme une roue dentée (44'),
- et le dispositif d'engrenage (46') présente au moins une région de denture, laquelle vient en prise avec la roue dentée (44').

6. Interverrouillage selon la revendication 4, dans lequel
- le dispositif d'engrenage est conçu comme un guide coulisse (46).

7. Interverrouillage selon l'une des revendications précédentes, dans lequel
- il est prévu au moins un élément de ressort (42) destiné à solliciter l'un au moins des éléments de réception (26a, 26b) vers la position d'interverrouillage.

8. Interverrouillage selon l'une des revendications précédentes, dans lequel
- il est prévu un dispositif de blocage sur la partie d'actionnement (14), destiné à bloquer le déplacement des éléments de réception (26a, 26b).

9. Interverrouillage selon l'une des revendications précédentes, dans lequel
- il est prévu au moins une fixation permettant de fixer la pièce de liaison (28) à une partie de porte ou de butée (18), dans lequel la fixation permet un décalage d'une partie au moins de la pièce de liaison (28).

10. Interverrouillage selon l'une des revendications précédentes, dans lequel
- la pièce de liaison (28) est fixée à une partie de porte ou de butée (18),
- et il est prévu un arbre d'actionnement (34) traversant la partie de porte ou de butée (18) et permettant d'activer et/ou de bloquer le déplacement des éléments de réception (26a, 26b) entre la position d'interverrouillage et la position d'ouverture.

11. Interverrouillage selon l'une au moins des revendications précédentes, dans lequel
- il est prévu un élément de liaison (50) entre la partie d'interverrouillage (12) et la partie d'actionnement (14), l'élément de liaison (50) permettant d'activer et/ou de bloquer le déplacement des éléments de réception (26a, 26b) entre la position d'interverrouillage et la position d'ouverture.

12. Interverrouillage selon l'une des revendications précédentes, dans lequel
- un chanfrein et/ou un arrondi (30a, 30b) est prévu sur l'un au moins des éléments de boulon (20a, 20b) et/ou sur l'un au moins des éléments de réception (26a, 26b).

13. Dispositif de sécurité comprenant un interverrouillage (10) selon l'une des revendications précédentes, comprenant
- une partie mobile (18) et une partie fixe (16) d'un dispositif de protection de séparation, dans lequel l'une parmi la partie d'interverrouillage (12) et la partie d'actionnement (14) est respectivement fixée à la partie mobile (18) et l'autre à la partie fixe (16) du dispositif de protection de séparation,
- dans lequel le dispositif de protection de séparation est disposé de manière à bloquer l'accès à une machine ou à une installation.

14. Procédé d'ouverture d'un interverrouillage (10), dans lequel
- une partie d'interverrouillage (12) présente au moins deux éléments de boulon (20a, 20b) faisant saillie dans des directions opposées,
- dans lequel les éléments de boulon (20a, 20b) sont déplaçables dans la partie d'interverrouillage (12), au moins entre une position de retrait et une position de fermeture, dans laquelle les extrémités des éléments de boulon (20a, 20b) sont plus éloignées les uns des autres dans la position de fermeture que dans la position de retrait,
- et deux éléments de réception (26a, 26b) disposés à distance l'un de l'autre, avec des ouvertures de réception (22a, 22b) pour la réception des éléments de boulon (20a, 20b) et avec une pièce de liaison (28) permettant de relier les éléments de réception (26a, 26b), sont prévus sur une partie d'actionnement,
- dans lequel, pour le déverrouillage de l'interverrouillage (10), les éléments de réception (26a, 26b) sont déplacés à partir d'une position d'interverrouillage, dans laquelle les éléments de boulon (20a, 20b) sont accueillis de part et d'autre dans les ouvertures (22a, 22b), vers une position d'ouverture dans laquelle l'espacement entre les éléments de réception (26a, 26b) est plus grand que dans la position d'interverrouillage, de sorte que les éléments de boulon (20a, 20b) sont libérés hors des ouvertures de réception (22a, 22b).
